# EUROPÄISCHE PATENTANMELDUNG

(11) **EP 4 537 995 A1**
(43) Veröffentlichungstag der Anmeldung: **16.04.2025**
(21) Anmeldenummer: 24202437.0
(22) Anmeldetag: 25.09.2024
(51) Int. Cl.: B25J 9/00, B25J 19/06, F16P 3/00, F16P 3/14

(54) **VORRICHTUNG ZUM ABSETZEN VON DRUCKPRODUKTEN AUF EINE PALETTE**

(30) Priorität: 10.10.2023 EP 23202617
(71) Anmelder: Heidelberger Druckmaschinen AG, 69115 Heidelberg (DE)
(72) Erfinder: Rehberg, Michael, 67346 Speyer (DE); Geider, Andreas, 68789 St. Leon-Rot (DE); Donges, Markus, 67063 Ludwigshafen (DE)

(57) **Zusammenfassung**

Eine erfindungsgemäße Vorrichtung zum Absetzen von Druckprodukten auf eine Palette, umfassend eine Förderstrecke, welche die Druckprodukte (5) zu einer Aufnahmeposition (6) transportiert, und einen Roboter (10) mit einem Roboterarm (11), welcher die Druckprodukte (5) an der Aufnahmeposition (6) von der Förderstrecke (4) abhebt, zur Palette (8) bewegt und auf der Palette (8) einen Palettenstapel bildend absetzt, zeichnet sich dadurch aus, dass die Vorrichtung (1) wenigstens einen Projektor (20) umfasst, welcher eine optische Markierung (21) auf dem Boden (3) im Gefahrenbereich (12) des Roboterarms (11) erzeugt und welcher eine optische Anlaufwarnung (22) beim Bewegungsstart des Roboterarms (11) erzeugt. Die Erfindung ermöglicht es in vorteilhafter Weise, das Bedienpersonal, z.B. einer Falzmaschine und deren Produktauslage, vor Gefahren durch Roboterbewegungen zu schützen. Die Erfindung kommt z.B. nach der Auslage einer Falzmaschine zum Einsatz.

## Beschreibung

### Erfindung

Die Erfindung betrifft eine Vorrichtung zum Absetzen von Druckprodukten auf eine Palette mit den Merkmalen des Oberbegriffs von Anspruch 1.

### Gebiet der Technik

Die Erfindung liegt auf dem technischen Gebiet der grafischen Industrie und dort insbesondere im Bereich des Handhabens (z.B. Greifen, Halten, Bewegen, Drehen, Wenden und/oder Ablegen) von Stapeln aus aufeinander liegenden, flexiblen und bevorzugt bedruckten und gefalzten flachen Produkten wie z.B. Falzbogen, bevorzugt aus Papier, Karton, Pappe, Kunststoff oder Verbundmaterial, mit einem Manipulator, insbesondere einem Gelenkarmroboter mit Greifereinrichtung für die Stapel.

### Stand der Technik

Es ist bereits bekannt, Stapel von flächigen Produkten auf einer (Rollen-) Förderstrecke zu transportieren, die Stapel mittels eines an einem Roboterarm angeordneten Greifers zu erfassen, von der Förderstrecke abzuheben, zu einer Palette zu bewegen und dort abzusetzen.

Die DE102020103398A1 offenbart eine Falzmaschine mit einer nachfolgenden Förderstrecke für gefalzte Produkte und mit einem Roboterarm, welche die Produkte von der Förderstrecke abhebt, zu einer Palette bewegt und dort absetzt. Der Roboterarm entspricht in seiner Bauweise und in seinen Bewegungen einem üblichen Industrieroboter, weshalb ein Gefahrenbereich um den Roboter herum bevorzugt eingezäunt wird.

Die DE202019106975U1 offenbart Ähnliches, wobei hier der Roboterarm einem sogenannten kollaborativen Roboter entspricht und eine Einzäunung deshalb nicht erforderlich ist.

Der Bewegungsbereich des Roboterarms kann für das Bedienpersonal somit einen Gefahrenbereich darstellen. Statt den Gefahrenbereich einzuzäunen, kann dieser Bereich auch markiert werden.

Die US9764484B2 offenbart einen Roboter, welcher auf einem Boden steht und einen Projektor, welcher sichtbares Licht auf den Boden wirft, um einen Gefahrenbereich um den Roboter herum zu kennzeichnen.

Eine besondere Gefahrensituation kann sich für das Bedienpersonal beim Anlaufen einer Maschine ergeben. Bei Druck- und Falzmaschinen ist es daher z.B. üblich, das Anlaufen der jeweiligen Maschine dem Bedienpersonal akustisch mitzuteilen.

### Technische Aufgabe

Es ist daher eine Aufgabe der vorliegenden Erfindung, eine Verbesserung gegenüber dem Stand der Technik zu schaffen, welche es insbesondere ermöglicht, das Bedienpersonal, z.B. einer Falzmaschine und deren Produktauslage, vor Gefahren durch Roboterbewegungen zu schützen.

### Erfindungsgemäße Lösung der Aufgabe

Diese Aufgabe wird erfindungsgemäß durch eine Vorrichtung nach Anspruch 1 gelöst.

Vorteilhafte und daher bevorzugte Weiterbildungen der Erfindung ergeben sich aus den Unteransprüchen sowie aus der Beschreibung und den Zeichnungen.

Eine erfindungsgemäße Vorrichtung zum Absetzen von Druckprodukten auf eine Palette, umfassend eine Förderstrecke, welche die Druckprodukte zu einer Aufnahmeposition transportiert, und einen Roboter mit einem Roboterarm, welcher die Druckprodukte an der Aufnahmeposition von der Förderstrecke abhebt, zur Palette bewegt und auf der Palette einen Palettenstapel bildend absetzt, zeichnet sich dadurch aus, dass die Vorrichtung wenigstens einen Projektor umfasst, welcher eine optische Markierung auf dem Boden im Gefahrenbereich des Roboterarms erzeugt und welcher eine optische Anlaufwarnung beim Bewegungsstart des Roboterarms erzeugt.

### Vorteilhafte Ausbildungen und Wirkungen der Erfindung

Die Erfindung ermöglicht es in vorteilhafter Weise, das Bedienpersonal, z.B. einer Falzmaschine und deren Produktauslage, vor Gefahren durch Roboterbewegungen zu schützen. Die Erfindung kommt z.B. nach der Auslage einer Falzmaschine zum Einsatz.

Die Erfindung bietet den Vorteil, dass dem Bedienpersonal nicht nur ein Gefahrenbereich, also dessen Ort, optisch angezeigt wird, sondern auch das Eintreten oder Verändern der Gefahrensituation, also auch des Zustands, optisch angezeigt wird. Eine potenzielle Gefährdung des Bedienpersonals kann auf diese Weise weiter verringert werden. Auch ist es in vorteilhafter Weise möglich, beide Anzeigen (optische Markierung und optische Anlaufwarnung) mit denselben technischen Mitteln zu erzeugen. Die Kosten einer entsprechenden Vorrichtung können auf diese Weise ebenfalls verringert werden.

Es kann ein einzelner Projektor vorgesehen sein, welcher die optische Markierung und die optische Anlaufwarnung erzeugt. Es kann bevorzugt eine Mehrzahl von Projektoren vorgesehen sein, z.B. zwei, drei, vier oder fünf, welche gemeinsam die optische Markierung und die optische Anlaufwarnung erzeugen, z.B. jeweils bereichs- oder abschnittsweise. Bei einer reckteckförmigen Markierung kann z.B. jede Seite des Rechtecks von einem Projektor erzeugt werden.

### Weiterbildungen der Erfindung

Im Folgenden werden bevorzugte Weiterbildungen der Erfindung (kurz: Weiterbildungen) beschrieben. Diese können - wo es sich nicht technisch ausschließt - auch untereinander kombiniert werden.

Eine Weiterbildung kann sich dadurch auszeichnen, dass der Projektor automatisch aktivierbar ist. Eine Weiterbildung kann sich dadurch auszeichnen, dass der Projektor produktionsabhängig aktivierbar ist. Die Aktivierung kann durch die Robotersteuerung erfolgen und soll insbesondere nicht händisch und nicht durch das Bedienpersonal erfolgen. Anstelle nur eines Projektors können auch mehrere Projektoren vorgesehen sein, welche bei Aktivierung gemeinsam die optische Markierung oder die optische Anlaufwarnung erzeugen. Es kann auch vorgesehen sein, dass die optische Markierung und/oder die optische Anlaufwarnung jeweils zwei oder mehr Bereichen (z.B. auf dem Boden einer Produktionsstätte) umfassen, welche zusammenhängen oder nicht zusammenhängen; z.B. kann auf jeder Seite einer Förderstrecke ein solcher Bereich erzeugt werden.

Eine Weiterbildung kann sich dadurch auszeichnen, dass der Projektor zum Erzeugen der optischen Markierung im Dauermodus betrieben wird. Im Dauermodus wird die optische Markierung kontinuierlich und ohne Unterbrechungen erzeugt.

Eine Weiterbildung kann sich dadurch auszeichnen, dass die optische Markierung eine Fläche oder ein Flächenrand umfasst und/oder dass die optische Anlaufwarnung eine Fläche oder ein Flächenrand umfasst. Dabei kann es sich bezüglich der optischen Markierung und der optischen Anlaufwarnung um dieselbe Fläche bzw. denselben Flächenrand oder um verschiedene Flächen bzw. verschiedene Flächenränder handeln. Sowohl die optische Markierung als auch die optische Anlaufwarnung kann durch Beleuchten, zum Beispiel eines Bodens der Produktionsstätte, erzeugt werden. Das Beleuchten kann in einem vorgegebenen Bereich erfolgen, zum Beispiel kann eine Kreisfläche, eine Rechteckfläche oder eine Quadratfläche bzw. deren jeweiliger Rand beleuchtet werden.

Eine Weiterbildung kann sich dadurch auszeichnen, dass der Projektor zum Erzeugen der optischen Anlaufwarnung im Blinkmodus betrieben wird. Im Blinkmodus wird die optische Anlaufwarnung nicht kontinuierlich und mit Unterbrechungen erzeugt. Eine Weiterbildung kann sich dadurch auszeichnen, dass der Projektor vor dem Anlaufen einer Bewegung des Roboterarms vom Dauermodus in den Blinkmodus wechselt. Eine Weiterbildung kann sich dadurch auszeichnen, dass der Projektor nach dem Anlaufen einer Bewegung des Roboterarms vom Blinkmodus zurück in den Dauermodus wechselt. Durch das Aktivieren des Blinkmodus soll das Bedienpersonal über eine drohende potenzielle Verletzungsgefahr informiert werden und auf diese Weise in die Lage versetzt werden, den Gefahrenbereich unverzüglich zu verlassen. Es kann zum Beispiel vorgesehen sein, dass nur der Rand des Gefahrenbereichs während des Blinkmodus blinkt; alternativ kann die gesamte Fläche blinken. Sowohl die optische Markierung als auch die optische Anlaufwarnung können hinsichtlich der Position des Roboters symmetrisch (zum Beispiel kreisrund oder quadratisch) oder asymmetrisch (zum Beispiel elliptisch, rechteckig oder beliebig geformt) ausgestaltet sein.

Eine Weiterbildung kann sich dadurch auszeichnen, dass die optische Anlaufwarnung eine vorgegebene Anzahl von Sekunden vor dem Start der Bewegung des Roboterarms aktiviert wird. Eine Weiterbildung kann sich dadurch auszeichnen, dass die optische Anlaufwarnung eine vorgegebene Anzahl von Sekunden nach dem Start der Bewegung des Roboterarms deaktiviert wird. Beispielsweise kann das Aktivieren etwa 3 Sekunden vor und das Deaktivieren etwa 3 Sekunden nach dem Bewegen des Roboterarms erfolgen.

Eine Weiterbildung kann sich dadurch auszeichnen, dass beim Wechsel zwischen Dauermodus und Blinkmodus und beim Wechsel zurück in den Dauermodus ein Farbwechsel erfolgt. Das kontinuierliche Beleuchten im Dauermodus und das nicht kontinuierliche Beleuchten im Blinkmodus können somit in voneinander verschiedenen Farben erfolgen (z.B. Rot und Gelb).

Eine Weiterbildung kann sich dadurch auszeichnen, dass der Projektor an der Förderstrecke oder am Roboter angeordnet ist; der Projektor kann dabei hochgesetzt sein; alternativ kann der Projektor nahe beim Boden angeordnet sein.

Eine Weiterbildung kann sich dadurch auszeichnen, dass der Roboter ortsveränderlich ist, zum Beispiel mobil zwischen wenigstens zwei Positionen bei wenigstens zwei verschiedenen Maschinen/Falzmaschinen. Eine Weiterbildung kann sich dadurch auszeichnen, dass die optische Markierung oder eine erweiterte optische Markierung bei und/oder nach einer Ortsveränderung des Roboters aktiviert ist, um beim Neupositionieren des Roboters vorgegebene Sicherheitsabstände einzuhalten. Die Sicherheitsabstände können relativ zu Maschinen oder Wänden vorgegeben sein. Beispielsweise kann das Bedienpersonal instruiert sein, den Roboter nur dort zu positionieren, wo die optische Markierung oder die erweiterte optische Markierung den Boden der Produktionsstätte ungestört erreicht. Alternativ kann zusätzlich zum Projektor auch eine Kamera vorgesehen sein, welche die optische Markierung oder die erweiterte optische Markierung auf dem Boden erfasst, auswertet und eine Warnung veranlasst, für den Fall, dass die Markierung den Boden der Produktionsstätte nicht ungestört erreicht.

Eine Weiterbildung kann sich dadurch auszeichnen, dass der Roboter ein kollaborierendes Robotersystem ist. Eine Weiterbildung kann sich dadurch auszeichnen, dass der Roboter ein Cobot ist. Ein solcher Roboter weist üblicherweise keine vor Gefahren schützen Einzäunung auf. Ein solcher Roboter ist zudem meist leicht und kompakt genug, um an verschiedenen Orten eingesetzt zu werden, also zum Beispiel auf dem Boden einer Produktionsstätte verschoben zu werden. In diesem Fall ist es von Vorteil, keine fixen Markierungen für den Gefahrenbereich auf dem Boden vorzusehen, sondern die Markierungen mitbewegbar zu gestalten.

Eine Weiterbildung kann sich dadurch auszeichnen, dass der Projektor wenigstens eine LED-Leuchte oder wenigstens eine Laser-Leuchte umfasst.

Eine Weiterbildung kann sich dadurch auszeichnen, dass die Vorrichtung eine zusätzliche optische und/oder akustische Warnung erzeugt, insbesondere beim Anlaufen bzw. beim Starten.

Eine Weiterbildung kann sich dadurch auszeichnen, dass der wenigstens eine Projektor bevorzugt elektrisch auf einen Ausfall überwacht wird und dass bei Ausfall eines Projektors oder mehrerer Projektoren automatisch vorgegebene Sicherheitsmaßnahmen eingeleitet werden. Die Sicherheitsmaßnahmen können dabei Folgendes (einzeln oder in Kombination) umfassen: Aktivieren einer optischen Warnung, bevorzugt eines Warnhinweises auf einem Bedienerdisplay und/oder einer Warnleuchte; Reduzierung der Arbeitsgeschwindigkeit des Roboterarms und bevorzugt auch der Förderstrecke; Automatisches Informieren der Serviceeinheit des Maschinenherstellers (sogenannter "remote service"). Zusätzlich kann der Bediener per Anzeige aufgefordert werden, eine Absperreinrichtung, z.B. einen Kettenständer, aufzustellen und die erfolgte Ausführung zu bestätigen. Die Reduzierung der Arbeitsgeschwindigkeit kann schrittweise erfolgen, z.B. kann bei Ausfall nur eines Projektors (von mehreren) und bei aufgestellter Absperrung die Geschwindigkeit bei Normalgeschwindigkeit belassen werden und bei Ausfall von zwei Projektoren die Geschwindigkeit auf einen Wert zwischen Normalgeschwindigkeit und Null reduziert werden, z.B. 50% oder 25%. Bei Ausfall eines weiteren Projektors kann die Geschwindigkeit auf Null reduziert werden, d.h. es kommt zum Stillstand. Falls das erfolgte Aufstellen der Absperreinrichtung nicht bestätigt wird, kann ebenfalls ein Stillstand erfolgen. Auch eine zusätzliche akustische Warnung ist möglich.

Die in den obigen Abschnitten Technisches Gebiet, Erfindung und Weiterbildungen sowie im folgenden Abschnitt Ausführungsbeispiele offenbarten Merkmale und Merkmalskombinationen stellen - in beliebiger Kombination miteinander - weitere vorteilhafte Weiterbildungen der Erfindung dar.

### Ausführungsbeispiele zur Erfindung und Figuren

Die Figuren 1 bis 4 zeigen bevorzugte Ausführungsbeispiele der Erfindung und der Weiterbildungen. Einander entsprechende Merkmale sind in den Figuren mit denselben Bezugszeichen versehen. Sich in den Figuren wiederholende Bezugszeichen wurden der Übersichtlichkeit teils weggelassen.
Figur 1 zeigt eine schematische Darstellung einer Draufsicht eines bevorzugten Ausführungsbeispiels einer erfindungsgemäßen Vorrichtung.
Figur 2 zeigt ebenfalls eine schematische Darstellung einer Draufsicht eines weiteren bevorzugten Ausführungsbeispiels einer erfindungsgemäßen Vorrichtung.
Figur 3 zeigt eine Darstellung möglicher zeitlicher Abläufe beim Wechsel zwischen Dauermodus und Blinkmodus beim Betreiben einer bevorzugten erfindungsgemäßen Vorrichtung.
Figur 4 zeigt eine schematische Darstellung einer Draufsicht eines ortsveränderlichen, bevorzugten Ausführungsbeispiels der erfindungsgemäßen Vorrichtung gemäß Figur 1.

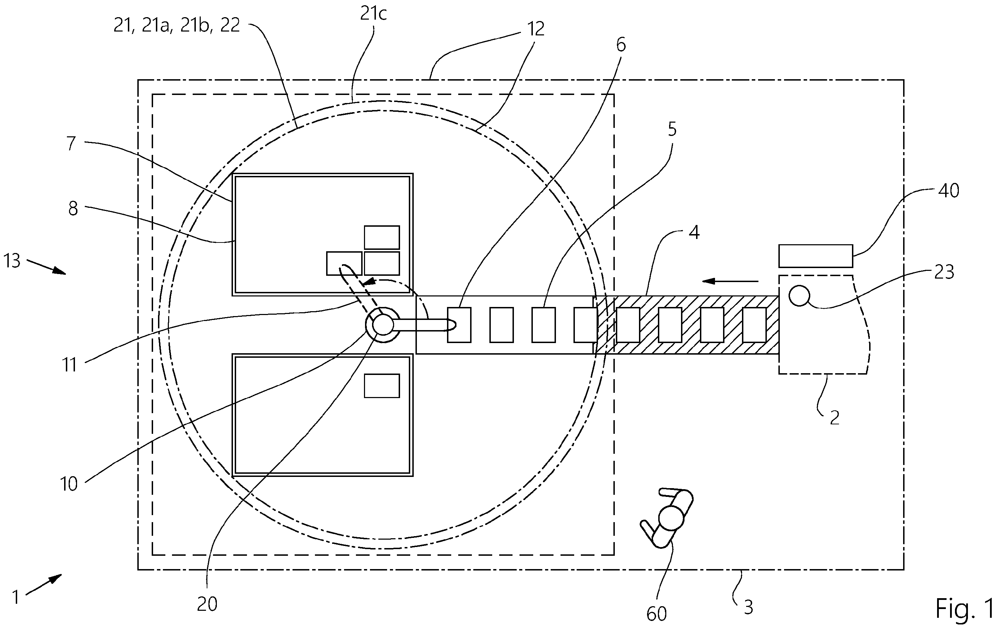

In Figur 1 ist eine erfindungsgemäße Vorrichtung 1 gezeigt, welche sich nahe bei einer Maschine 2, zum Beispiel einer Falzmaschine, und auf einem Boden 3 einer Produktionsstätte, zum Beispiel eines grafischen Betriebes, angeordnet befindet. Die Maschine 2 umfasst eine Förderstrecke 4, zum Beispiel einen Rollentisch, zum Fördern von Druckprodukten 5 (oder Stapeln von Druckprodukten) hin zu einer Aufnahmeposition 6 der Förderstrecke 4. Der gestrichelt dargestellte Bereich der Förderstrecke kann zur Gefahrenvermeidung eingehaust sein. Bei der Förderstrecke 4 sind auch zwei Absetzpositionen 7 angeordnet, an welchen die Druckprodukte 5 bevorzugt auf Paletten 8 abgesetzt werden und dabei jeweils einen Palettenstapel bilden.

Die erfindungsgemäße Vorrichtung 1 umfasst einen Roboter 10 mit einem beweglichen Roboterarm 11, zum Beispiel einem Gelenkarm, und (nicht dargestellter) Greifeinrichtung für die Druckprodukte 5. Die möglichen Raumbewegungen des Roboterarms 11 definieren einen Gefahrenbereich 12 auf dem Boden 3, den das Bedienungspersonal 60 zumindest während der Bewegung des Roboterarms 11 - um potenzielle Verletzungen zu vermeiden - nicht betreten darf. In Figur 1 ist der Roboter 10 an einer Position 13 am Ende der Förderstrecke 4 angeordnet.

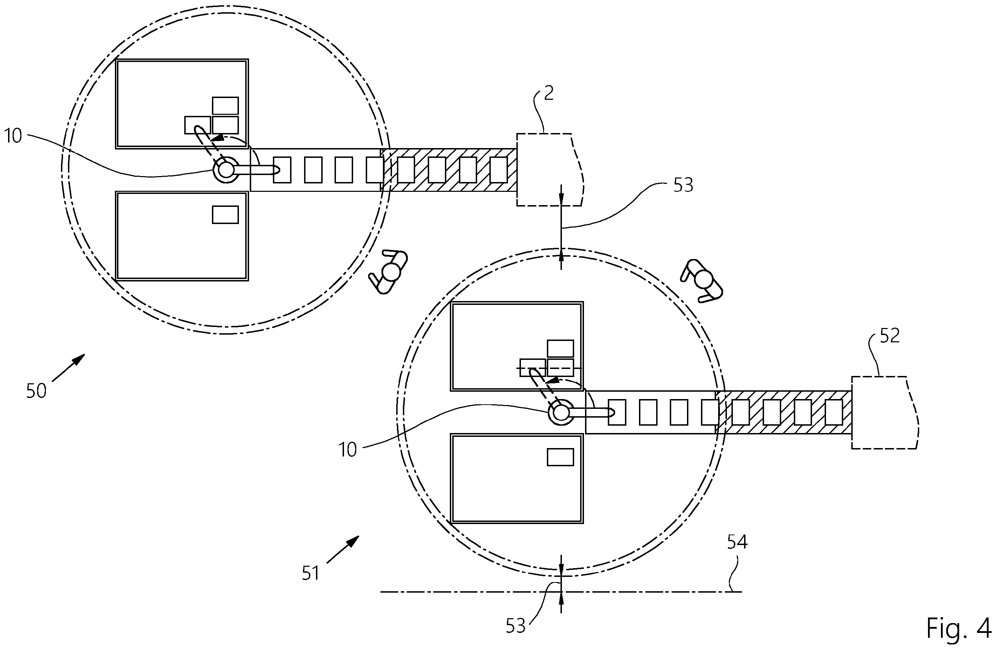

Die erfindungsgemäße Vorrichtung 1 umfasst weiterhin einen Projektor 20, welcher eine optische Markierung 21, beispielsweise eine Fläche 21a mit einem Flächenrand 21b, auf dem Boden 3, zum Beispiel durch Beleuchten, erzeugt. Der Projektor 20 kann auch eine erweiterte optische Markierung 21c erzeugen (vergleiche Figur 4). Der Projektor 20 erzeugt neben der optischen Markierung 21 auch eine optische Anlaufwarnung 22, zum Beispiel ebenfalls durch Beleuchten. Die Maschine 2 kann eine zusätzliche Warneinrichtung 23 umfassen, zum Beispiel eine Leuchte und/oder ein Lautsprecher, welche ebenfalls (optische und/oder akustische) Anlaufwarnungen erzeugen kann/können.

Die Maschine 2 umfasst ferner einen bevorzugt digitalen Rechner 40, welcher auch die Bewegungen des Roboters 10 und das Aktivieren/Deaktivieren des Projektes 20 steuern kann.

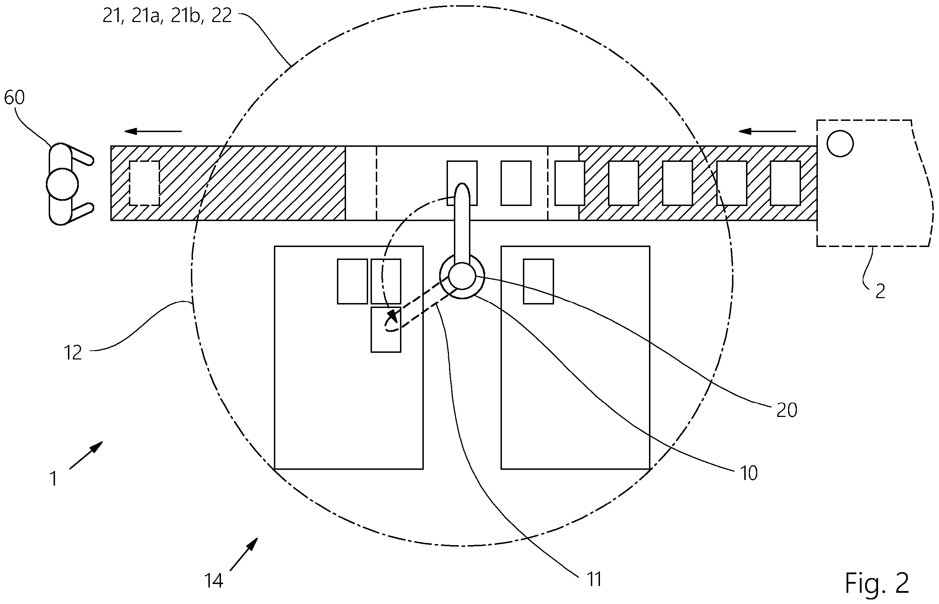

Figur 2 zeigt Ähnliches wie Figur 1 mit dem Unterschied, dass hier der Roboter 10 an einer Position 14 an einer Seite der Förderstrecke 4 angeordnet ist. Auf diese Weise ist das Ende der Förderstrecke 10 für das Bedienungspersonal 60 zugänglich, zum Beispiel um Druckprodukte 5 zu Kontrollzwecken entnehmen zu können.

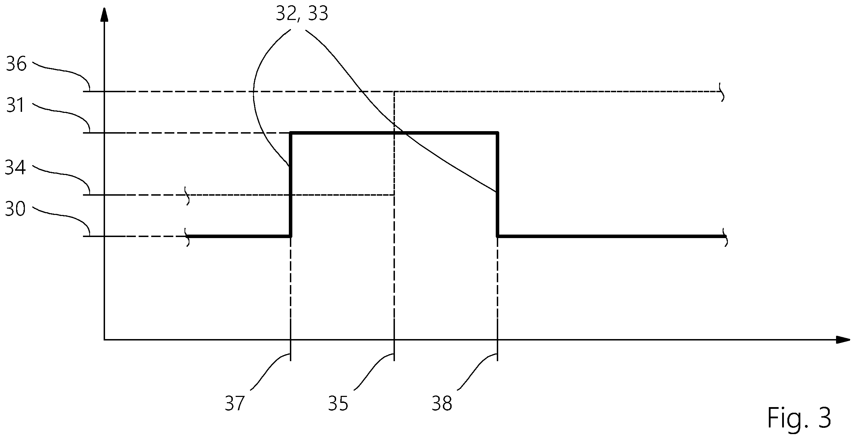

In Figur 3 ist ein Koordinatensystem mit zwei Kurven dargestellt, wobei die horizontale Achse eine Zeitachse ist. Die vertikale Achse umfasst die verschiedenen Modi, also den Dauermodus 30, den Blinkmodus 31, den Stillstand des Roboters 34 und das Bewegen des Roboters 36. Die punktiert dargestellte Kurve zeigt den Wechsel des Zustands des Roboters 10 vom Stillstand 34 in den Bewegungszustand 36; dieser Wechsel erfolgt beim Anlaufen 35 bzw. beim Start der Bewegung des Roboterarms 11. Die nicht punktiert dargestellte Kurve zeigt den Wechsel des Zustands des Projektors 20 bzw. den Wechsel zwischen optischer Markierung 21 und optischer Anlaufwarnung 22: zunächst wird der Projektor 20 im Dauermodus 30 betrieben, dann erfolgt der Wechsel 32 in den Blinkmodus 31 und schließlich der Wechsel 32 zurück in den Dauermodus 30; beim jeweiligen Wechsel 32 kann auch ein Farbwechsel 33 erfolgen. Der Start 37 der Anlaufwarnung 22 und das Ende 38 der Anlaufwarnung 22 kann jeweils zeitlich versetzt (vor bzw. nach) zum Anlaufen 35 der Bewegung des Roboterarms 11 erfolgen; der zeitliche Versatz liegt bevorzugt im Bereich weniger Sekunden.

In Figur 4 ist erkennbar, dass der Roboter 10 ortsveränderlich sein kann und auf diese Weise produktionsabhängig bei der Maschine 2 (erste Position 50) oder bei wenigstens einer weiteren Maschine 52 (zweite Position 51) positioniert werden kann. Dabei ist es von Vorteil, wenn der Projektor 20 am Roboter 10 angeordnet ist und mit diesem ortsveränderlich ist; auf diese Weise kann der Gefahrenbereich 21 durch die optische Markierung 21 auch beim Bewegen des Roboters bzw. bei dessen Neupositionierung angezeigt werden. Dabei kann bevorzugt die erweiterte optische Markierung 21c verwendet werden, um vorgegebene Sicherheitsabstände 53 zu den Maschinen 2 und 52 oder zu Wänden 54 einzuhalten.

### Bezugszeichenliste

- 1: Vorrichtung
- 2: Maschine, z.B. Falzmaschine
- 3: Boden der Produktionsstätte
- 4: Förderstrecke, z.B. Rollentisch
- 5: Druckprodukte
- 6: Aufnahmeposition
- 7: Absetzposition
- 8: Palette
- 10: Roboter
- 11: Roboterarm
- 12: Gefahrenbereich
- 13: Position am Ende der Förderstrecke
- 14: Position an einer Seite der Förderstrecke
- 20: Projektor
- 21: optische Markierung
- 21a: Fläche
- 21b: Flächenrand
- 21c: erweiterte optische Markierung
- 22: optische Anlaufwarnung
- 23: zusätzliche Warneinrichtung
- 30: Dauermodus
- 31: Blinkmodus
- 32: Wechsel
- 33: Farbwechsel
- 34: Stillstand des Roboters
- 35: Anlaufen (Start) der Bewegung des Roboterarms
- 36: Bewegen des Roboter
- 37: Start Anlaufwarnung
- 38: Ende Anlaufwarnung
- 40: Rechner
- 50: erste Position
- 51: zweite Position
- 52: andere Maschine/-n
- 53: Sicherheitsabstand/-abstände
- 54: Wand
- 60: Bedienpersonal

## Patentansprüche

1. Vorrichtung zum Absetzen von Druckprodukten auf eine Palette, umfassend eine Förderstrecke, welche die Druckprodukte (5) zu einer Aufnahmeposition (6) transportiert, und einen Roboter (10) mit einem Roboterarm (11), welcher die Druckprodukte (5) an der Aufnahmeposition (6) von der Förderstrecke (4) abhebt, zur Palette (8) bewegt und auf der Palette (8) einen Palettenstapel bildend absetzt,
**dadurch gekennzeichnet,**
**dass** die Vorrichtung (1) wenigstens einen Projektor (20) umfasst, welcher eine optische Markierung (21) auf dem Boden (3) im Gefahrenbereich (12) des Roboterarms (11) erzeugt und welcher eine optische Anlaufwarnung (22) beim Bewegungsstart des Roboterarms (11) erzeugt.

2. Vorrichtung nach Anspruch 1,
**dadurch gekennzeichnet,**
**dass** der Projektor (20) automatisch aktivierbar ist.

3. Vorrichtung nach einem der vorhergehenden Ansprüche,
**dadurch gekennzeichnet,**
**dass** der Projektor (20) zum Erzeugen der optischen Markierung (21) im Dauermodus (30) betrieben wird.

4. Vorrichtung nach einem der vorhergehenden Ansprüche,
**dadurch gekennzeichnet,**
**dass** die optische Markierung (21) eine Fläche (21a) oder ein Flächenrand (21b) umfasst und/oder dass die optische Anlaufwarnung (22) eine Fläche (21a) oder ein Flächenrand (21b) umfasst.

5. Vorrichtung nach einem der vorhergehenden Ansprüche,
**dadurch gekennzeichnet,**
**dass** der Projektor (20) zum Erzeugen der optischen Anlaufwarnung (22) im Blinkmodus (31) betrieben wird.

6. Vorrichtung nach Anspruch 5,
**dadurch gekennzeichnet,**
**dass** der Projektor (20) vor dem Anlaufen einer Bewegung des Roboterarms (11) vom Dauermodus (30) in den Blinkmodus (31) wechselt.

7. Vorrichtung nach Anspruch 6,
**dadurch gekennzeichnet,**
**dass** der Projektor (20) nach dem Anlaufen einer Bewegung des Roboterarms (11) vom Blinkmodus (31) zurück in den Dauermodus (30) wechselt.

8. Vorrichtung nach Anspruch 7,
**dadurch gekennzeichnet,**
**dass** beim Wechsel (32) zwischen Dauermodus (30) und Blinkmodus (31) und beim Wechsel (32) zurück in den Dauermodus (30) ein Farbwechsel (33) erfolgt.

9. Vorrichtung nach einem der vorhergehenden Ansprüche,
**dadurch gekennzeichnet,**
**dass** der Roboter (10) ortsveränderlich ist.

10. Vorrichtung nach Anspruch 9,
**dadurch gekennzeichnet,**
**dass** die optische Markierung (21) oder eine erweiterte optische Markierung (21c) bei und/oder nach einer Ortsveränderung (50, 51) des Roboters (10) aktiviert ist, um beim Neupositionieren des Roboters (10) vorgegebene Sicherheitsabstände (53) einzuhalten.

11. Vorrichtung nach einem der vorhergehenden Ansprüche,
**dadurch gekennzeichnet,**
**dass** bei Ausfall eines Projektors oder mehrerer Projektoren automatisch vorgegebene Sicherheitsmaßnahmen eingeleitet werden.
